# EUROPEAN PATENT APPLICATION

(11) **EP 4 668 364 A1**
(43) Date of publication of application: **24.12.2025**
(21) Application number: 24877494.5
(22) Date of filing: 08.10.2024
(51) Int. Cl.: H01M 4/525, H01M 4/505, C01G 53/00, H01M 4/131, H01M 10/052, H01M 4/02

(54) **POSITIVE ELECTRODE FOR LITHIUM SECONDARY BATTERY, PRODUCTION METHOD THEREFOR, AND LITHIUM SECONDARY BATTERY COMPRISING SAME**

(30) Priority: 13.10.2023 KR 20230136819
(71) Applicant: LG Energy Solution Ltd., Seoul 07335 (KR)
(72) Inventor: KANG, Sora, Daejeon 34122 (KR); KWON, Hyejin, Daejeon 34122 (KR); KIM, Sohee, Daejeon 34122 (KR); LEE, Choonghyeon, Daejeon 34122 (KR); KIM, Myeongsoo, Daejeon 34122 (KR); CHOI, Seokin, Daejeon 34122 (KR); OH, Kyungbae, Daejeon 34122 (KR)
(74) Representative: Goddar, Heinz J.
(86) International application number: PCT/KR2024/015268
(87) International publication number: WO 2025/079957

(57) **Abstract**

The present invention relates to a positive electrode for a lithium secondary battery, a method of manufacturing the same and a lithium secondary battery comprising the same.

## Description

### [Cross-reference to related application(s)]

The present application claims the benefit of priority based on Korean Patent Application No. 10-2023-0136819, filed on October 13, 2023, the contents of which are incorporated herein by reference as part of this specification.

### [Field]

The present invention relates to a positive electrode for a lithium secondary battery, a method of manufacturing the same and a lithium secondary battery comprising the same.

### [Background Art]

A secondary battery refers to a device that converts external electrical energy into chemical energy for storage and generates electricity when needed. The term rechargeable battery is also used to mean that it can be charged multiple times. Common secondary batteries include lead-acid batteries, nickel-cadmium (NiCd) batteries, nickel-metal hydride (NiMH) batteries, and lithium secondary batteries. Secondary batteries provide both economic and environmental advantages compared to primary batteries that are used once and discarded.

Meanwhile, as wireless communication technology continues to develop, there is an increasing demand for secondary batteries as energy sources for portable devices or automobile accessories that require lightweight, thin, and compact designs. In particular, as hybrid vehicles and electric vehicles are being commercialized to prevent environmental pollution, research is emerging to use secondary batteries in next-generation vehicle batteries to reduce manufacturing costs and weight while extending life. Among various secondary batteries, lithium secondary batteries that are lightweight, have high energy density and operating voltage, and long cycle life are recently drawing attention.

Generally, a lithium secondary battery is manufactured by mounting an electrode assembly consisting of a negative electrode, a positive electrode and a separator inside a cylindrical or prismatic metal can or a pouch-type case made of aluminum laminate sheet, and injecting electrolyte into the interior of the electrode assembly.

Conventionally, a liquid electrolyte made by dissolving lithium salt in a non-aqueous organic solvent has been mainly used as an electrolyte for lithium secondary batteries. However, such liquid electrolytes have high possibility of electrode material deterioration and organic solvent evaporation, as well as concerns about combustion or explosion due to ambient temperature and battery temperature rise, and risk of leakage, making it difficult to implement various types of lithium secondary batteries with high safety.

Meanwhile, all-solid-state batteries using solid electrolytes have advantages in that they can be manufactured in a safe and simple form of electrode assembly because organic solvents are excluded.

In manufacturing the all-solid-state battery, when applying multi-particles as an electrode active material, cracks occur during pressing process and/or charge-discharge process, and voids occur at the interface between the electrode active material and the solid electrolyte due to the non-fluid properties of the solid electrolyte.

Also, in manufacturing the all-solid-state battery, when applying single particles as an electrode active material, aggregation easily occurs during manufacture of the single particles, requiring additional crushing process which increases production costs and deteriorates crystallinity of the single particles.

Therefore, development of electrode active materials that can reduce crack generation in the electrode active materials while securing improved battery life and high rate characteristics is needed.

### [Prior Art Documents]

### [Patent Documents]

(Patent Document 1) Korean Patent Publication No. 10-2019-0139033 (Dec. 17, 2019)

### [Detailed Description of Invention]

### [Technical Problems]

The inventors have conducted various research to solve the above problems and completed the present invention by confirming that a battery with improved life characteristics can be manufactured by using quasi-single particles which are an intermediate form between multi-particles and single particles as an active material, since lithium ion conduction is secured at the interface between the solid electrolyte and the positive electrode, and crack generation in the positive electrode active material is reduced.

Therefore, an object of the present invention is to provide a positive electrode material comprising positive electrode active material that improves lithium ion conduction at the interface between the solid electrolyte and the positive electrode.

Another object of the present invention is to provide a positive electrode comprising positive electrode material with improved life characteristics and a secondary battery comprising the same.

### [Technical Solution]

According to one aspect of the present invention, there is provided a positive electrode material for a secondary battery comprising a positive electrode active material, wherein the positive electrode active material comprises quasi-single particles, the quasi-single particles comprise 20 or fewer primary particles, and an average particle diameter (D₅₀) of the primary particles is 1 to 3 µm.

In the positive electrode material for a secondary battery, the quasi-single particles may be an agglomerate of 2 to 20 primary particles.

In the positive electrode material for a secondary battery, particle strength of the quasi-single particles may be 200 MPa to 800 MPa.

In the positive electrode material for a secondary battery, a specific surface area of the quasi-single particles may have a value of 0.15 m²/g to 0.30 m²/g.

In the positive electrode material for a secondary battery, a value of I(003)/I(104) of the particles in XRD diffraction of the quasi-single particles may be 1.5 or more.

In the positive electrode material for a secondary battery, the positive electrode active material may be represented by Chemical Formula 1 below:

[Chemical Formula 1] LiₓNiₐCo_{b}Mn_{c}M_{z}O_{y}

wherein 0.2≤x≤1.2, 0.3≤a≤1, 0≤b<0.4, 0≤c<0.4, 0≤z<0.4, 1.5<y<3, a+b+c+z is 1 or less, and M includes one or more selected from Ti, Zr, Nb, Mo, W, Al, Si, Ga, Ge and Sn.

According to one aspect of the present invention, there is provided a method of manufacturing a positive electrode material for a secondary battery, comprising:
(S1) manufacturing a mixture comprising a positive electrode active material of quasi-single particles;
(S2) heat treating the mixture to manufacture a positive electrode active material composite of the quasi-single particles; and
(S3) manufacturing a positive electrode composite by mixing the manufactured positive electrode active material composite, a conductive material and a solid electrolyte.

The method of manufacturing a positive electrode material for a secondary battery may further comprise heat treating the mixture at a temperature range of 820°C to 860°C in the step of manufacturing the positive electrode active material composite.

According to one aspect of the present invention, there is provided a positive electrode for a secondary battery comprising the aforementioned positive electrode material.

According to one aspect of the present invention, there is provided a lithium secondary battery comprising the positive electrode, a negative electrode and a solid electrolyte.

### [Effects of Invention]

The present invention has the effect of improving life characteristics by using quasi-single particles, which are an intermediate form between multi-particles and single particles, as an electrode active material, since lithium ion conductivity is secured at the interface between solid electrolyte and positive electrode, and crack generation in the positive electrode active material is reduced.

Also, an electrode active material with excellent crystallinity can be manufactured without additional milling process during an electrode active material manufacturing process, thereby improving ease of electrode process and productivity.

### [Best Mode for Carrying Out the Invention]

Hereinafter, the present invention will be described in more detail.

Terms or words used in this specification and claims should not be interpreted as limited to ordinary or dictionary meanings, but should be interpreted as meanings and concepts consistent with the technical idea of the present invention based on the principle that the inventor can appropriately define the concepts of terms to describe their invention in the best way.

The terms used herein are used only to describe specific embodiments and are not intended to limit the present invention. Expressions of the singular number include plural expressions unless the context clearly indicates otherwise. In the present invention, the terms "include" or "have" etc. are used to specify the presence of features, numbers, steps, operations, components, parts or combinations thereof described in the specification, and should be understood as not precluding in advance the presence or possibility of addition of one or more other features, numbers, steps, operations, components, parts or combinations thereof.

In the present invention, "primary particles" refer to a minimum particle unit distinguished as one lump when observing the cross section of a positive electrode active material through scanning electron microscope (SEM), which may consist of one crystal grain or multiple crystal grains.

In the present invention, "secondary particles" refer to particles formed by agglomeration of multiple primary particles, meaning an agglomerate of 40 or more primary particles.

In this specification, "single particle" is a term used to distinguish from conventional secondary particle type positive electrode active material particles formed by agglomeration of tens to hundreds of primary particles, and includes the concept of single particles consisting of one primary particle or agglomerate particles of 30 or fewer primary particles.

In this specification, "multi-particle" is a term distinguished from the above single particle, referring to a unit body of secondary particle form formed by agglomeration of tens to hundreds of primary particles.

In this specification, "quasi-single particle" is a term distinguished from single particles and multi-particles, referring to particles formed by agglomeration of 20 or fewer primary particles. In manufacturing all-solid-state batteries, when applying multi-particles as an electrode active material, cracks occur during pressing process and/or charge-discharge process, and voids occur at the interface between the electrode active material and solid electrolyte due to the non-fluid properties of the solid electrolyte. Also, in manufacturing all-solid-state batteries, when applying single particles as the electrode active material, aggregation easily occurs during manufacture of the single particles, requiring additional crushing process which increases production costs and deteriorates crystallinity of the single particles.

In the present invention, it was aimed to provide an electrode containing an electrode active material that can reduce crack generation in electrode active materials while securing improved battery life and high rate characteristics.

Hereinafter, the configuration and effects of the present invention will be described in detail.

### Positive Electrode Material

According to one embodiment of the present invention, the positive electrode material may comprise a positive electrode active material of quasi-single particles, wherein the quasi-single particles may comprise 20 or fewer primary particles, and an average particle diameter (D₅₀) of the primary particles may be 1 to 3 µm.

The positive electrode active material may be quasi-single particles that are agglomerates of 2 to 20 primary particles. That is, the quasi-single particles are composed of secondary particles formed by agglomeration of 2 to 20 primary particles. In the present invention, primary particles refer to primary structures of single particles, and secondary particles refer to agglomerates, i.e., secondary structures, in which primary particles are agglomerated by physical or chemical bonding between primary particles without agglomeration or granulation process. The quasi-single particles may be agglomerates of 2 to 20 primary particles. More specifically, the quasi-single particles may be agglomerates of 2 or more, 3 or more, 4 or more, or 5 or more primary particles, and, 20 or fewer, 19 or fewer, 18 or fewer, 17 or fewer, 16 or fewer, 15 or fewer, 14 or fewer, 13 or fewer, 12 or fewer, 11 or fewer, or 10 or fewer primary particles.

The average particle diameter (D₅₀) of the quasi-single particles may be 1 to 3 µm. More specifically, the average particle diameter (D₅₀) of the quasi-single particles may be 1.0 µm or more, 1.1 µm or more, 1.2 µm or more, 1.3 µm or more, 1.4 µm or more, or 1.5 µm or more, and, 3.0 µm or less, 2.9 µm or less, 2.8 µm or less, 2.7 µm or less, or 2.6 µm or less, but is not limited to these examples.

When the average particle diameter of primary particles of the quasi-single particles exceeds 3 µm, it shows a form of secondary particles agglomerated together. At this time, milling process is required during positive electrode manufacture, and there is a problem that, when breaking the agglomeration by the milling process, crystallinity of particles decreases. Also, when the average particle diameter of primary particles of the quasi-single particles is less than 1 µm, there is a problem of side reactions due to relatively more contact area with solid electrolyte compared to total positive electrode diameter, and a problem of easy crack generation due to low particle strength.

In the present invention, average particle diameter (D₅₀) can be defined as the particle diameter corresponding to 50% of cumulative volume in the particle size distribution curve. The average particle diameter (D₅₀) can be measured using, for example, laser diffraction method. For example, the method of measuring average particle diameter (D₅₀) of a positive electrode active material can calculate the average particle diameter (D₅₀) corresponding to 50% of cumulative volume in the measuring device by dispersing positive electrode active material particles in a dispersant, introducing into a commercially available laser diffraction particle size analyzer (for example, Microtrac MT 3000), and irradiating ultrasound of about 28kHz at output 40W. According to one embodiment of the present invention, the particle strength of the quasi-single particles may be 200 MPa to 800 MPa. More specifically, the particle strength of the quasi-single particles may be 200 MPa or more, 210 MPa or more, 220 MPa or more, 230 MPa or more, 240 MPa or more, 250 MPa or more, 260 MPa or more, 270 MPa or more, 280 MPa or more, 290 MPa or more, or 300 MPa or more, and, 800 MPa or less, 750 MPa or less, 700 MPa or less, 650 MPa or less, 600 MPa or less, 550 MPa or less, and 550 MPa or less, but is not limited to these examples.

The quasi-single particles according to the present invention are particles of intermediate form between multi-particles and single particles, and may have larger particle strength than the multi-particles but smaller particle strength than the single particles.

According to one embodiment of the present invention, the value of the specific surface area of the quasi-single particles may be 0.15 m²/g to 0.30 m²/g. More specifically, the specific surface area of the quasi-single particles may be 0.15 m²/g or more, 0.16 m²/g or more, 0.17 m²/g or more, 0.18 m²/g or more, 0.19 m²/g or more, 0.20 m²/g or more, 0.21 m²/g or more, or 0.22 m²/g or more, and, 0.30 m²/g or less, 0.29 m²/g or less, 0.28 m²/g or less, 0.27 m²/g or less, 0.26 m²/g or less, 0.25 m²/g or less, 0.24 m²/g or less, or 0.23 m²/g or less.

The quasi-single particles according to the present invention are particles of intermediate form between multi-particles and single particles, and may have smaller surface area than the single particles but larger surface area than the multi-particles.

According to one embodiment of the present invention, the value of I(003)/I(104) of the particles in XRD diffraction of the quasi-single particles may be 1.5 or more. More specifically, the value of XRD I(003)/I(104) of the single particles may be 1.50, 1.51, 1.52, 1.53, 1.54, 1.55, 1.56, 1.57, 1.58, 1.59, 1.60, 1.61, 1.62, 1.63, or 1.64.

Here, the value of I(003)/I(104) in XRD diffraction is a factor indicating the degree of cation mixing. That is, the larger the value of I(003)/I(104), the better the positive electrode has been manufactured without cation mixing, and when the value is 1.2 or more, it can be confirmed that the positive electrode has been properly manufactured.

Here, (003) refers to the plane of the 003 direction in the crystal structure of a positive electrode active material, and (104) refers to the plane of the 104 direction in the crystal structure of the positive electrode active material. The intensity contributed by the corresponding plane can be confirmed through XRD, and also how well the layered structure of NCM has been formed can be confirmed.

In the present invention, "cation mixing" refers to the phenomenon where cations with similar radii exchange places with each other during high-temperature crystallization heat treatment in the positive electrode manufacturing process. For example, during the manufacturing process of a positive electrode active material, when heat treating at high temperature, lithium with high vapor pressure evaporates more easily than other elements, causing irreversible reactions such as cation mixing where Ni²⁺ is substituted in the empty lithium ion layer. Cation mixing phenomenon can also occur during charge-discharge process when nickel ions are substituted in the empty lithium ion sites as lithium ions are deintercalated.

According to one embodiment of the present invention, the positive electrode active material may be represented by Chemical Formula 1 below:

[Chemical Formula 1] LiₓNiₐCo_{b}Mn_{c}M_{z}O_{y}

In Chemical Formula 1, 0.2≤x≤1.2, 0.3≤a≤1, 0≤b<0.4, 0≤c<0.4, 0≤z<0.4, 1.5<y<3, a+b+c+z is 1 or less, and M includes one or more selected from Ti, Zr, Nb, Mo, W, Al, Si, Ga, Ge and Sn.

### Method of Manufacturing Positive Electrode

According to one embodiment of the present invention, the method of manufacturing a positive electrode material for a secondary battery may comprise the following steps:
(S1) manufacturing a mixture comprising a positive electrode active material of quasi-single particles;
(S2) heat treating the mixture to manufacture a positive electrode active material composite of the quasi-single particles; and
(S3) manufacturing a positive electrode composite by mixing the manufactured positive electrode active material composite, conductive material and solid electrolyte.

Step (S1) of manufacturing a mixture comprising a positive electrode active material of quasi-single particles includes manufacturing lithium composite transition metal oxide.

First, a precursor containing nickel (Ni), cobalt (Co) and manganese (Mn) is prepared, wherein the content of nickel (Ni) is 60 mol% or less of total transition metal content, and cobalt (Co) is contained more than manganese (Mn). The positive electrode active material precursor can be purchased commercially or manufactured according to well-known methods of manufacturing a positive electrode active material precursor in the art. For example, the precursor can be manufactured by a coprecipitation reaction by adding an ammonium cation-containing complexing agent and a basic compound to a transition metal solution containing a nickel-containing raw material, a cobalt-containing raw material and a manganese-containing raw material.

The nickel-containing raw material may be, for example, nickel-containing acetate, nitrate, sulfate, halide, sulfide, hydroxide, oxide or oxyhydroxide, and specifically may be Ni(OH)₂, NiO, NiOOH, NiCO₃ · 2Ni(OH)₂ · 4H₂O, NiC₂O₂ · 2H₂O, Ni(NO₃)₂ · 6H₂O, NiSO₄, NiSO₄ · 6H₂O, nickel fatty acid salt, nickel halide or combinations thereof, but is not limited thereto. The cobalt-containing raw material may be cobalt-containing acetate, nitrate, sulfate, halide, sulfide, hydroxide, oxide or oxyhydroxide, and specifically may be Co(OH)₂, CoOOH, Co(OCOCH₃)₂ · 4H₂O, Co(NO₃)₂ · 6H₂O, CoSO₄, Co(SO₄)₂ · 7H₂O or combinations thereof, but is not limited thereto.

The manganese-containing raw material may be, for example, manganese-containing acetate, nitrate, sulfate, halide, sulfide, hydroxide, oxide, oxyhydroxide or combinations thereof, and specifically may be manganese oxides such as Mn₂O₃, MnO₂, or Mn₃O₄; manganese salts such as MnCO₃, Mn(NO₃)₂, MnSO₄, manganese acetate, manganese dicarboxylate salt, manganese citrate, manganese or fatty acid salt; manganese oxyhydroxide, manganese chloride, or combinations thereof, but is not limited thereto.

The transition metal solution can be manufactured by adding a nickel-containing raw material, a cobalt-containing raw material and a manganese-containing raw material to a solvent, specifically water, or a mixed solvent of water and organic solvent that can be uniformly mixed with water (for example, alcohol, etc.), or can be manufactured by mixing an aqueous solution of the nickel-containing raw material, an aqueous solution of a cobalt-containing raw material and a manganese-containing raw material.

The method of manufacturing a positive electrode material for a secondary battery comprises (S2) heat treating the mixture to manufacture a positive electrode active material composite of the quasi-single particles.

In step (S2), the mixture may be heat treated at a temperature range of 820°C to 860°C. Generally, for single particles, a positive electrode active material composite is manufactured by heat treating at 880°C or higher, and for multi-particles, the positive electrode active material composite is manufactured by heat treating at 810°C or lower. In contrast, the positive electrode active material composite of quasi-single particles according to the present invention is characterized by heat treating the mixture at a temperature range of 820°C to 860°C.

When heat treating the mixture containing the positive electrode active material of quasi-single particles at a temperature below 820°C, there is a problem that the primary particles clump together to have multi-particle form, and when heat treating at a temperature exceeding 860°C, there is a problem that productivity is reduced as an additional milling process is required due to excessive agglomeration of the primary particles.

The method of manufacturing a positive electrode material for a secondary battery comprises (S3) manufacturing a positive electrode composite by mixing the manufactured positive electrode active material composite, conductive material and solid electrolyte.

A positive electrode composite can be manufactured by mixing the positive electrode active material composite manufactured in step (S2), conductive material and solid electrolyte. The conductive material and solid electrolyte may be as described below.

### Positive Electrode and Secondary Battery

According to one embodiment of the present invention, the positive electrode for a secondary battery may comprise the positive electrode material.

Also, according to one embodiment of the present invention, the lithium secondary battery may comprise the positive electrode, a negative electrode and a solid electrolyte.

A positive electrode for a lithium secondary battery and a lithium secondary battery can be manufactured using the positive electrode active material manufactured according to one embodiment of the present invention. Specifically, the positive electrode comprises a positive electrode current collector and a positive electrode active material layer formed on the positive electrode current collector and comprising the positive electrode active material.

In the positive electrode, the positive electrode current collector is not particularly limited as long as it has conductivity without causing chemical changes in the battery, and for example, stainless steel, aluminum, nickel, titanium, sintered carbon, or aluminum or stainless steel surface-treated with carbon, nickel, titanium or silver, etc. may be used. Also, the positive electrode current collector typically may have a thickness of 3 to 500 µm, and adhesion of the positive electrode active material can be enhanced by forming fine irregularities on the surface of the positive electrode current collector. For example, it can be used in various forms such as film, sheet, foil, net, porous body, foam, nonwoven fabric, etc.

Also, the positive electrode active material layer may include a conductive material and binder along with the aforementioned positive electrode active material. At this time, the conductive material is used to impart conductivity to the electrode, and anything having electron conductivity without causing chemical changes in the constituted battery can be used without particular limitation. Specific examples include graphites such as natural graphite or artificial graphite; carbon-based materials such as carbon black, acetylene black, ketjen black, channel black, furnace black, lamp black, thermal black, carbon fiber; metal powder or metal fiber such as copper, nickel, aluminum, silver; conductive whiskers such as zinc oxide, potassium titanate; conductive metal oxides such as titanium oxide; or conductive polymers such as polyphenylene derivatives, and one kind alone or mixtures of two or more kinds thereof may be used. The conductive material may typically be included in an amount of 1 to 30 wt% based on the total weight of the positive electrode active material layer.

Also, the binder serves to improve adhesion between the positive electrode active material particles and adhesion between the positive electrode active material and the positive electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluorine rubber, or various copolymers thereof, and one kind alone or mixtures of two or more kinds thereof may be used. The binder may be included in an amount of 1 to 30 wt% based on the total weight of the positive electrode active material layer.

Also, the solid electrolyte included in the positive electrode may include one or more selected from polymer-based solid electrolyte, oxide-based solid electrolyte, sulfide-based solid electrolyte.

The positive electrode may be manufactured according to conventional positive electrode manufacturing methods except for using the aforementioned positive electrode active material. Specifically, it may be manufactured by coating a composition for forming a positive electrode active material layer comprising the aforementioned positive electrode active material and optionally, binder and conductive material on the positive electrode current collector, followed by drying and rolling. At this time, the types and contents of the positive electrode active material, binder, conductive material are as described above.

The solvent may be a solvent commonly used in the art, and examples include dimethylsulfoxide (DMSO), isopropyl alcohol, N-methylpyrrolidone (NMP), acetone or water, and one kind alone or mixtures of two or more kinds thereof may be used. The amount of solvent used is sufficient to dissolve or disperse the positive electrode active material, conductive material and binder considering slurry coating thickness and manufacturing yield, and to have viscosity that can show excellent thickness uniformity during coating for positive electrode manufacture. Alternatively, the positive electrode may also be manufactured by casting the composition for forming the positive electrode active material layer on a separate support, then laminating the film obtained by peeling from this support onto the positive electrode current collector.

According to another embodiment of the present invention, an electrochemical device comprising the positive electrode is provided. The electrochemical device may specifically be a battery or a capacitor, and more specifically may be a lithium secondary battery. The lithium secondary battery specifically comprises a positive electrode, a negative electrode positioned opposite to the positive electrode, a separator interposed between the positive electrode and negative electrode, and an electrolyte, wherein the positive electrode is as described above. Also, the lithium secondary battery may optionally further include a battery case housing the electrode assembly of the positive electrode, the negative electrode, the separator, and a sealing member sealing the battery case.

In the lithium secondary battery, the negative electrode comprises a negative electrode current collector and a negative electrode active material layer positioned on the negative electrode current collector.

The negative electrode current collector is not particularly limited as long as it has high conductivity without causing chemical changes in the battery, and for example, copper, stainless steel, aluminum, nickel, titanium, sintered carbon, copper or stainless steel surface-treated with carbon, nickel, titanium, silver, aluminum-cadmium alloy, etc. may be used. Also, the negative electrode current collector typically may have a thickness of 3 to 500 µm, and like the positive electrode current collector, fine irregularities may be formed on the surface of the current collector to strengthen binding with a negative electrode active material. For example, it can be used in various forms such as film, sheet, foil, net, porous body, foam, nonwoven fabric, etc. The negative electrode active material layer includes a negative electrode active material and optionally a binder and a conductive material. The negative electrode active material layer may be manufactured, for example, by coating a composition for forming a negative electrode containing a negative electrode active material, and optionally a binder and a conductive material on the negative electrode current collector and drying, or by casting the composition for forming a negative electrode on a separate support, then laminating the film obtained by peeling from this support onto the negative electrode current collector.

As the negative electrode active material, compounds capable of reversible intercalation and deintercalation of lithium may be used. Specific examples include carbonaceous materials such as artificial graphite, natural graphite, graphitized carbon fiber, amorphous carbon; metallic compounds capable of forming alloys with lithium such as Si, Al, Sn, Pb, Zn, Bi, In, Mg, Ga, Cd, Si alloys, Sn alloys or Al alloys; metal oxides capable of doping and dedoping lithium such as SiO_{β} (0<β<2), SnO₂, vanadium oxide, lithium vanadium oxide; or composites containing the above metallic compounds and carbonaceous materials such as Si-C composites or Sn-C composites, and one or more mixtures of these may be used. Also, metal lithium foil may be used as the negative electrode active material. Also, carbon materials may include both low crystalline carbon and high crystalline carbon. Representative examples of low crystalline carbon include soft carbon and hard carbon, and representative examples of high crystalline carbon include high-temperature sintered carbon such as amorphous, plate-like, flaky, spherical or fiber-type natural graphite or artificial graphite, Kish graphite, pyrolytic carbon, mesophase pitch based carbon fiber, meso-carbon microbeads, mesophase pitches, and petroleum or coal tar pitch derived cokes.

Also, the binder and conductive material may be the same as described above for the positive electrode.

In the lithium secondary battery, the solid electrolyte may include one or more selected from the group consisting of sulfide-based solid electrolyte, polymer-based solid electrolyte and oxide-based solid electrolyte. The solid electrolyte may be in particle form.

The sulfide-based solid electrolyte contains sulfur (S) and has ion conductivity of metals belonging to Group 1 or Group 2 of the periodic table, and may include Li-P-S based glass or LiP-S based glass ceramic.

Specifically, the sulfide-based solid electrolyte may include one or more selected from the group consisting of Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂ and Li₂S-GeS₂-ZnS, and preferably may include one or more selected from the group consisting of Li₆PS₅Cl, Li₆PS₅Br and Li₆PS₅I. The Li₆PS₅Cl, Li₆PS₅Br and Li₆PS₅I may be argyrodite type solid electrolytes. Also, the sulfide-based solid electrolyte may be in a form doped with trace elements, for example, Li₆PS₅Cl may be additionally doped with bromine (Br).

The polymer-based solid electrolyte is a composite of lithium salt and polymer resin, that is, a polymer electrolyte material formed by adding polymer resin to solvated lithium salt, which can show ion conductivity of about 1x10⁻⁷ S/cm or more, preferably about 1x10⁻⁵ S/cm or more. Non-limiting examples of the polymer resin include polyether-based polymers, polycarbonate-based polymers, acrylate-based polymers, polysiloxane-based polymers, phosphazene-based polymers, polyethylene derivatives, alkylene oxide derivatives such as polyethylene oxide, phosphate ester polymers, poly agitation lysine, polyester sulfide, polyvinyl alcohol, polyvinylidene fluoride, polymers containing ionic dissociative groups, etc., and may include one or more of these. Also, as the polymer resin, the polymer electrolyte may include one or more of branched copolymers, comb-like polymer resins and crosslinked polymer resins such as those where amorphous polymers like PMMA, polycarbonate, polysiloxane (pdms) and/or phosphazene are copolymerized as comonomers to PEO (poly ethylene oxide) main chain.

In the electrolyte of the present invention, the aforementioned lithium salt is an ionizable lithium salt that can be expressed as Li⁺X⁻. The anion of such lithium salt is not particularly limited, but examples include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The oxide-based solid electrolyte may have ion conductivity of metals belonging to Group 1 or Group 2 of the periodic table and contain oxygen (O). For example, it may include one or more selected from LLTO-based compounds, Li₆La₂CaTa₂O₁₂, Li₆La₂ANb₂O₁₂ (where A is Ca or Sr), Li₂Nd₃TeSbO₁₂, Li₃BO_{2.5}N_{0.5}, Li₉SiAlO₈, LAGP-based compounds, LATP-based compounds, Li1₊ₓTi₂₋ₓAlₓSi_{y}(PO₄)_{3-y} (where 0≤x≤1, 0≤y≤1), LiAlₓZr₂₋ₓ(PO₄)₃ (where 0≤x≤1, 0≤y≤1), LiTiₓZr₂₋ₓ(PO₄)₃ (where 0≤x≤1, 0≤y≤1), LISICON-based compounds, LIPON-based compounds, perovskite-based compounds, NASICON-based compounds and LLZO-based compounds.

The electrolyte may further include one or more additives such as, for example, haloalkylene carbonate compounds like difluoro ethylene carbonate, pyridine, triethyl phosphite, triethanolamine, cyclic ether, ethylene diamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol or aluminum trichloride for purposes such as improving battery life characteristics, suppressing battery capacity reduction, improving battery discharge capacity, etc. in addition to the above electrolyte components. At this time, the additive may be included in an amount of 0.1 to 5 wt% based on the total weight of the electrolyte. As described above, lithium secondary batteries comprising the positive electrode active material according to the present invention stably exhibit excellent discharge capacity, output characteristics and capacity retention, making them useful in portable device fields such as mobile phones, laptop computers, digital cameras, and electric vehicle fields such as hybrid electric vehicles (HEV).

Accordingly, according to another embodiment of the present invention, there is provided a battery module comprising the lithium secondary battery as a unit cell and a battery pack comprising the same.

The battery module or battery pack can be used as a power source for one or more large devices among Power Tools; Electric Vehicles (EV), Hybrid Electric Vehicles, and Plug-in Hybrid Electric Vehicles (PHEV); or power storage systems.

### [Examples]

Hereinafter, examples of the present invention will be described in detail so that those skilled in the art can easily carry out the present invention. However, the present invention can be implemented in various different forms and is not limited to the examples described herein.

### Example 1: Manufacture of Positive Electrode

### (1) Manufacture of Positive Electrode Active Material

Ni₈Co₁Mn₁(OH)₂ powder with D₅₀ of 4.0 µm was mixed with LiOH in a ratio of 1:1.03, then heat treated at 840°C for 20 hours in O₂ atmosphere to manufacture positive electrode active material.

### (2) Manufacture of Positive Electrode

A positive electrode was manufactured by mixing the positive electrode active material manufactured in (1), conductive material and solid electrolyte in a ratio of 60:35:5.

### Comparative Example 1: Single Particle Positive Electrode Active Material

A positive electrode was manufactured in the same manner as Example 1 except using Ni₈Co₁Mn₁(OH)₂ powder with D₅₀ of 4.0 µm as positive electrode active material and conducting heat treatment at 880°C.

### Comparative Example 2: Multi-particle Positive Electrode Active Material

A positive electrode was manufactured in the same manner as Example 1 except using Ni₈Co₁Mn₁(OH)₂ powder with D₅₀ of 4.0 µm as positive electrode active material and conducting heat treatment at 810°C.

### Experimental Example 1: Measuring Specific Surface Area

The specific surface area of positive electrode active material particles manufactured in Example 1 and Comparative Examples 1 and 2 was measured. The specific surface area of the particles was measured by BET method, and the results are shown in Table 1 below.

**[Table 1]**

| | Example 1 | Comparative Example 1 | Comparative Example 2 |
|---|---|---|---|
| Specific surface area (m²/g) | 0.29 | 0.25 | 0.54 |

As shown in Table 1 above, it was confirmed that the positive electrode active material particles according to Example 1 of the present invention have larger surface area than the positive electrode active material particles of Comparative Example 1 which are single particles, and smaller surface area than the positive electrode active material particles of Comparative Example 2 which are multi-particles.

### Experimental Example 2: Particle Strength of Positive Electrode Active Material

The particle strength of positive electrode active material particles manufactured in Example 1 and Comparative Examples 1 and 2 was measured. The particle strength of the particles was measured using a particle strength meter (Shimadzu, MCT-W500-E), measuring 10 different positive electrode active material particles of D₅₀ size, and deriving the average value of the measured particle strengths, and the results are shown in Table 2 below.

**[Table 2]**

| | Example 1 | Comparative Example 1 | Comparative Example 2 |
|---|---|---|---|
| Particle strength (MPa) | 400 | 800 | 150 |

As shown in Table 2 above, it was confirmed that the positive electrode active material particles according to Example 1 of the present invention have smaller particle strength than the positive electrode active material particles of Comparative Example 1 which are single particles, and larger particle strength than the positive electrode active material particles of Comparative Example 2 which are multi-particles.

### Experimental Example 3: Primary Particle Size

The particle size of positive electrode active material particles manufactured in Example 1 and Comparative Examples 1 and 2 was measured. The particle size was calculated by measuring the diameter of primary particles observed using field emission scanning electron microscope (FE-SEM) and calculating the average value, and the results are shown in Table 3 below.

**[Table 3]**

| | Example 1 | Comparative Example 1 | Comparative Example 2 |
|---|---|---|---|
| Particle size (*µ*m) | 2.0 | 4.0 | 0.6 |
| Standard deviation (STD) | 0.447 | 0.229 | 0.150 |

As shown in Table 3 above, it was confirmed that the positive electrode active material particles according to Example 1 of the present invention have smaller particle size than the positive electrode active material particles of Comparative Example 1 which are single particles, and larger particle size than the positive electrode active material particles of Comparative Example 2 which are multi-particles.

### Experimental Example 4: Measuring value of XRD 1(003)/1(104)

The X-ray diffraction of positive electrode active material particles manufactured in Example 1 and Comparative Examples 1 and 2 was analyzed. The X-ray diffraction analysis of the particles was measured using an X-ray diffractometer, and the results are shown in Table 4 below.

**[Table 4]**

| | Example 1 | Comparative Example 1 | Comparative Example 2 |
|---|---|---|---|
| XRD 1(003)/1(104) | 1.64 | 1.32 | 1.65 |

As shown in Table 4 above, it was confirmed that the positive electrode active material manufactured in Example 1 and Comparative Example 2 was synthesized with high crystallinity with almost no cation mixing.

### Experimental Example 5: Evaluation of Battery Performance

The capacity retention rate and Coulombic Efficiency (C.E) after performing 100 cycles were compared for batteries comprising the positive electrodes manufactured in Example 1 and Comparative Examples 1 and 2, and the results are shown in Table 5 below.

Initial charge-discharge was performed under 0.05 C condition to measure initial charge capacity. At this time, charging was performed by constant current constant voltage (CCCV) method, and cut off was controlled at 0.01 C. Afterwards, capacity was measured by applying charge C-rate of 0.1 C and discharge current of 1 C. Then, charge-discharge rate was changed to 0.33 C and retention rate compared to initial capacity was measured after 100 cycles. The measured charge-discharge capacity of the battery is shown in Table 5 below.

**[Table 5]**

| | **Charge (mAh/g)** | **Discharge (mAh/g)** | **Coulomb Efficiency (%)** | **100 cycle retention rate (%)** | **1C retention rate (%)** |
|---|---|---|---|---|---|
| **Example 1** | 220 | 208 | 94.5 | 98.5 | 92.4 |
| **Comparative Example 1** | 220 | 195 | 88.6 | 97.2 | 92.0 |
| **Comparative Example 2** | 217 | 200 | 92.2 | 97.7 | 91.5 |

As shown in Table 5 above, it was confirmed that Example 1 comprising the positive electrode active material having a single particle form according to the present invention shows excellent Coulombic efficiency and also excellent retention rate after 100 cycles compared to Comparative Examples 1 and 2 comprising single particles and multi-particles.

## Claims

1. A positive electrode material for a secondary battery comprising a positive electrode active material,
wherein the positive electrode active material comprises quasi-single particles,
the quasi-single particles comprise 20 or fewer primary particles, and
an average particle diameter (D₅₀) of the primary particles is 1 to 3 µm.

2. The positive electrode material for a secondary battery of claim 1, wherein the quasi-single particles are an agglomerate of 2 to 20 primary particles.

3. The positive electrode material for a secondary battery of claim 1, wherein particle strength of the quasi-single particles is 200 MPa to 800 MPa.

4. The positive electrode material for a secondary battery of claim 1, wherein a specific surface area of the quasi-single particles has a value of 0.15 m²/g to 0.30 m²/g.

5. The positive electrode material for a secondary battery of claim 1, wherein a value of I(003)/I(104) of the particles in XRD diffraction of the quasi-single particles is 1.5 or more.

6. The positive electrode material for a secondary battery of claim 1, wherein the positive electrode active material is represented by Chemical Formula 1 below:
[Chemical Formula 1] LiₓNiₐCo_{b}Mn_{c}M_{z}O_{y}
wherein 0.2≤x≤1.2, 0.3≤a≤1, 0≤b<0.4, 0≤c<0.4, 0≤z<0.4, 1.5<y<3, a+b+c+z is 1 or less, and M includes one or more selected from Ti, Zr, Nb, Mo, W, Al, Si, Ga, Ge and Sn.

7. A method of manufacturing a positive electrode material for a secondary battery, comprising:
(S1) manufacturing a mixture comprising a positive electrode active material of quasi-single particles;
(S2) heat treating the mixture to manufacture a positive electrode active material composite of the quasi-single particles; and
(S3) manufacturing a positive electrode composite by mixing the manufactured positive electrode active material composite, a conductive material and a solid electrolyte.

8. The method of manufacturing a positive electrode material for a secondary battery of claim 7, wherein in the step of manufacturing the positive electrode active material composite, the mixture is heat treated at a temperature range of 820°C to 860°C.

9. A positive electrode for a secondary battery comprising the positive electrode material according to any one of claims 1 to 6.

10. A lithium secondary battery comprising:
the positive electrode according to claim 9;
a negative electrode; and
a solid electrolyte.
